Europäisches Patentamt

European Patent Office

Office européen des brevets

(19)

(11) Publication number: **0 100 345**

**B1**

(12) **EUROPEAN PATENT SPECIFICATION**

(45) Date of publication of patent specification: **07.05.86**

(21) Application number: **83900672.3**

(22) Date of filing: **08.02.83**

(86) International application number:
**PCT/SE83/00042**

(87) International publication number:
**WO 83/02731 18.08.83 Gazette 83/19**

(51) Int. Cl.⁴: **B 01 D 33/02,** B 01 D 35/26,
D 21 D 5/06

(54) SCREEN MACHINE.

(30) Priority: **10.02.82 SE 8200787**

(43) Date of publication of application:
**15.02.84 Bulletin 84/07**

(45) Publication of the grant of the patent:
**07.05.86 Bulletin 86/19**

(84) Designated Contracting States:
**AT BE CH DE FR GB LI LU NL SE**

(56) References cited:
**US-A-1 429 707**
**US-A-3 750 885**

(73) Proprietor: **NILSSON, Harry**
**Nägeliweg 7**
**CH-Tägerwilen (CH)**

(72) Inventor: **NILSSON, Harry**
**Nägeliweg 7**
**CH-Tägerwilen (CH)**

(74) Representative: **Modin, Jan et al**
**c/o Axel Ehrners Patentbyra AB Box 5342**
**S-102 46 Stockholm (SE)**

Courier Press, Leamington Spa, England.

## Description

The present invention concerns a screen machine, particularly for cellulose pulp and recycled pulp, including a screen drum rotatable about a rotational axis and mounted in a housing having an inlet for pulp suspension, an outlet for accepts, and, a discharge opening for rejects, the screen drum being so arranged between the inlet and the outlet that flow therethrough from its inlet side to its outlet side is directed radially inwardly towards the rotational axis.

From US—A—3 750 885 is known a screen machine of this general kind, wherein the pulp enters the housing tangentially through an inlet so as to pass spirally downwardly around a screen drum while at the same time passing radially inwardly through the screen drum to be discharged as a cleaned stream through an outlet. The screen drum is provided with circumferentially spaced vanes longitudinally extended throughout the inner peripheral wall of the screen drum. Upon rotation of the screen drum these vanes cause an outward flow of the fluid stream through the openings of the screen drum and serve to dislodge particulates which may be adhering to the outer face of the screen drum. However, this outward flow is localized to the immediate vicinity of each vane while the remaining areas of the screen drum is left unflushed by radially outward flow. Further, the vanes cause rotation of the pulp within the screen drum.

From US—A—1 429 707 is known a further pulp screen of this kind having a cylindrical screen drum and self clearing action. The pulp is fed into the drum in one end thereof and is forced to rotate with the drum by means of blades. By the action of centrifugal force fibers and water are forced radially outwards through the screen slots. The casing of the machine is elliptical, and, thus, at two points the casing is located closer to the drum than at other points. At these two points, therefore, the screened pulp located outside the drum and also rotating therewith will be "compressed" and cause a back-flow radially inward through the screen slots. Thereby these are cleared from too big fibers etc. which are brought out through a discharge at the other end of the drum.

The screen machine according to the present invention also has a self-clearing action which, however, has been accomplished by the utilization of centrifugal force. The characteristic features of the invention will appear from the annexed claims.

The basis conception of the invention, thus, is to clear screen holes in a screen rotor by means of centrifugal force immediately after each screen zone, within which screening takes place against the action of centrifugal force. Cylindrical as well as conical screen drums can be contemplated.

An embodiment of the invention will now be described, reference being made to the accompanying drawing, wherein

Fig. 1 is an axial section through a machine according to the invention, and

Fig. 2 is a section along line II—II of Fig. 1.

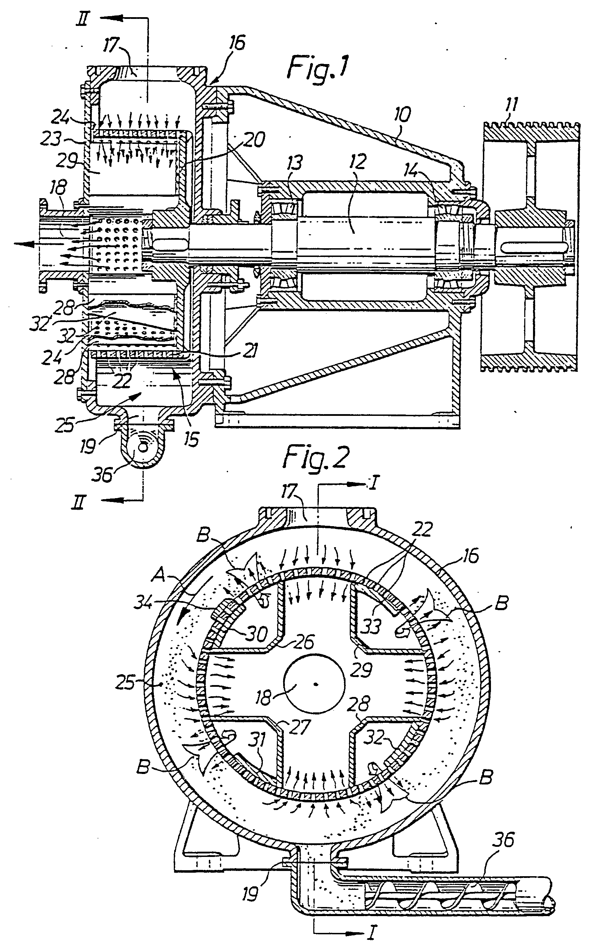

In Fig. 1 is shown a machine casing 10, in which a shaft 12 driveable by a pulley 11 is journalled in bearings 13, 14. In the other end of shaft 12 is mounted a screen drum 15 for rotation with the shaft, said drum being concentrically located within a substantially cylindrical screen housing 16.

In the example shown the shaft 12 is horizontal and the screen housing 16 is provided with an inlet 17 for unscreened stock located at the top of the periphery, a central outlet 18 for screened stock (accepts) coaxial with the screen drum 15, and a selectively openable discharge opening 19 for non-screenable goods (rejects). The screen drum 15 has a tight hub disc 20 attached to the shaft 12 and a wall 21 arranged at the periphery of the hub disc, the drum wall being provided with a plurality of screen openings 22. Straight in front of the hub disc 20 the screen drum 15 is open towards the wall 23 of the screen housing, in which the outlet 18 is disposed. Between the wall 23 and the edge of the drum wall 21 there is an interspace 24.

The arrangement is such that the pulp suspension flows from the inlet 17, via the annular space 25 between the housing 16 and the drum wall 21 through the screen openings, and to the outlet 18, whether the drum is rotating or not. The pressure of the stock at the inlet 17 and within the annular space 25, thus, shall be so much greater than the pressure in the outlet 18, that a flow takes place radially inwards through the screen openings 22 in spite of rotation of the drum. This flow is indicated in Fig. 2 by little arrows in positions about 12, 3, 6 and 9 o'clock.

Now, according to the invention, within the drum is arranged a number of fixed baffle plates 26, 27, 28, 29 shutting off one sector each of the interior of the drum from the outlet 18. The baffle plates 26—29, thus, extend from the wall 23 of the screen housing into the drum and terminate immediately adjacent the hub disc 20.

As mentioned above, there is an interspace 24 between the wall 23 and the open end of the screen drum. Because of this interspace the pressure of the annular space 25 exists also within the sectors defined by the drum wall 21 and the baffle plates 26—29.

At rotation of the drum in the direction of arrow A in Fig. 2, thus, screening takes place through the four portions of the drum wall 21 that are temporarily located between the baffle plates 29 and 26, 26 and 27, 27 and 28, and, 28 and 29. As in all screens clogging of the screen openings occurs — in this case on the outside of the drum wall 21 due to the screening radially inward.

By means of the baffle plates 26—29 according to the invention, however, after each screening zone is caused an automatic clearing of the screen openings 22. This clearing is achieved by the action of the centrifugal force on the water columns that are in screen openings within the effective area of the baffle plates. Within the screening zones the centrifugal force is not capable of neutralizing the pressure difference between the outside of the drum and its inside; this, however, is possible inside the baffle plates, where the outside pressure also prevails on the inside of the baffle plates. As soon as the drum has rotated to a sector defined by a baffle plate, thus, the water column present in the respective screen hole is thrusted out, and with it the fibres, staples and other things, that may have clogged a screen opening. Replacement of the water or the suspension thusly centrifugally pumped out of the space between the baffle plates and the drum wall 21 takes place by flow through the interspace 24 as is indicated by arrows B in positions about 11, 8, 5 and 2 o'clock in Fig. 2.

In order to restrict the arc along which the centrifugal pumping takes place, plates 30—33 adapted to the curvature of the drum wall 21 are installed along the latter part of the effective sector of the respective baffle plate — as seen in the direction of rotation of the screen drum. Hereby is achieved that particles that have just been thrusted out do not immediately turn inwards, but are given the opportunity to undisturbedly leave the immediate vicinity of the screen openings.

Advantageously the edges of the plates 30—33 turned against the direction of rotation of the drum are inclined towards the interspace 24, so that flow into the drum is counteracted and some scraping action is obtained. In Fig. 1 the baffle plate 28 is shown broken up so that the plate 32 with its inclined edge 32' is visible.

Advantageously, scrapers can be arranged on the outside of the screen drum at suitable locations along the clearing zones. An example of such a scraper 34 is shown in Fig. 2 within the clearing zone of the baffle plate 26.

Summing up, the machine according to the invention has the following features:

— the suspension to be screened is supplied on one side of the drum such that screening takes place radially inward;

— screening flow through the screen drum exclusively takes place due to the difference in suspension pressure at the inlet and outlet of the machine;

— intentional rotation of the suspension does not take place, neither inside nor outside the drum;

— the centrifugal force, that everywhere acts on the suspension which temporarily is present in the screen openings and, thus, there rotates with the drum, is allowed to act only within those zones where the baffle plates separate the drum from the pressure of the outlet which is low relative to the pressure of the inlet.

Particles that are cleared off the drum are collected at the discharge opening 19 and may at need be discharged by means of e.g. a screw 36.

## Claims

1. A screen machine, particularly for cellulose pulp and recycled pulp, including a screen drum (15) rotatable about a rotational axis and mounted in a housing (16) having an inlet (17) for pulp suspension, an outlet (18) for accepts, and, a discharge opening (19) for rejects, the screen drum (15) being so arranged between the inlet (17) and the outlet (18) that flow therethrough from its inlet side to its outlet side is directed radially inwardly towards the rotational axis, characterized in that at least one stationary baffle means (26) is arranged on the outlet side of the screen drum (15) which baffle means separates a sector of the screen drum from the outlet (18), and that along at least a part of this sector there is fluid communication past an edge of the screen drum between the inlet (17) and the space between the screen drum (15) and the baffle means (26), whereby the flow, taking place against the action of the centrifugal force at rotating screen means, is discontinued within the sector mentioned and is replaced by a counter-directed flow dependent on the centrifugal force.

2. A screen machine according to claim, characterized in that the communication is formed by an interspace (24) between a wall (23) of the housing (16) and the drum edge mentioned.

3. A screen machine according to claim 2, characterized in that the screen drum (15) is open at one end towards the wall (23), mentioned and that the baffle means (26) is attached to this wall and extends in the direction of the screen drum axis to the other end (20) of the screen drum.

4. A screen machine according to claim 2 or claim 3, characterized in that the outlet (18) is coaxial to the screen drum (15) and located in the wall (23) mentioned, and that a plurality of evenly distributed baffle means (26—29) is arranged within the screen drum (15).

5. A screen machine according to any of the preceding claims, characterized in that between each baffle means (26—29) and the screen drum (15) is arranged a fixed obstructing means (30—33) preventing flow through the screen means along a portion of the sector mentioned terminating that sector — as seen in the direction of rotation of the screen drum — while allowing flow along a portion thereof beginning said sector.

6. A screen machine according to any of the preceding claims, characterized in that on the inlet side of the screen drum (15) is arranged at least one scraper (34).

**Patentansprüche**

1. Eine Siebmaschine, insbesondere für Zellulosepulpe und rezyklierte Pulpe mit einer Siebtrommel (15), die um eine Drehachse drehbar und in einem Gehäuse (16) gelagert ist, das seinerseits einen Einlaß (17) für Pulpesuspension, einen Auslaß (18) für gesiebtes Material und eine Austrittsöffnung (19) für Rückstände aufweist, wobei die Siebtrommel (15) so zwischen dem Einlaß (17) und dem Auslaß (18) angeordnet ist, daß die die Trommel von der Einlaßseite zur Auslaßseite durchdringende Strömung radial einwärts zur Drehachse hin gereichtet, ist, dadurch gekennzeichnet, daß an der Auslaßseite der Siebtrommel (15) wenigstens ein ortsfestes Prallplattenmittel (26) angeordnet ist, das einen Sektor der Siebtrommel vom Auslaß (18) abtrennt, und daß entlang wenigstens eines Teiles dieses Sektors eine fluide Verbindung an einer Kante der Siebtrommel vorbei zwischen dem Einlaß (17) und dem Raum zwischen der Siebtrommel (15) und dem Prallplattenmittel (26) vorhanden ist, so daß die Strömung, die gegen die Wirkung der Zentrifugalkraft an rotierenden Siebmitteln stattfindet, innerhalb des erwähnten Sektors unterbrochen und durch eine entgegengereichtete, von der Zentrifugalkraft abhängige Strömung ersetzt ist.

2. Eine Siebmaschine nach Anspruch 1, dadurch gekennzeichnet, daß die Verbindung durch einen Zwischenraum (24) zwischen einer Wand (23) des Gehäuses (16) und der erwähnten Trommelkante ausgebildet ist.

3. Eine Siebmaschine nach Anspruch 2, dadurch gekennzeichnet, daß die Siebtrommel (15) an einer der erwähnten Wand (23) zugekehrten Stirnseite offen ist, und daß das Prallplattenmittel (26) an dieser Wand befestigt ist und sich in Richtung der Siebtrommelachse zur anderen Stirnseite (20) der Siebtrommel hin erstreckt.

4. Eine Siebmaschine nach Anspruch 2 oder 3, dadurch gekennzeichnet, daß der Auslaß (18) koaxial zur Siebtrommel (15) und in der erwähnten Wand (23) angeordnet ist, und daß eine Mehrzahl gleichmäßig verteilter Prallplattenmittel (26—29) innerhalb der Siebtrommel (15) angeordnet ist.

5. Eine Siebmaschine nach einem der voranstehenden Ansprüche, dadurch gekennzeichnet, daß zwischen jedem Prallplattenmittel (26—29) und der Siebtrommel (15) ein ortsfestes Blockiermittel (30—33) angeordnet ist, welches eine Strömung durch die Siebmittel entlang eines Teiles des erwähnten Sektors an dessen Ende — in Drehrichtung der Siebtrommel gesehen — verhindert, während es eine Strömung entlang eines Teiles am Anfang des Sektors zuläßt.

6. Eine Siebmaschine nach einem der voranstehenden Ansprüche, dadurch gekennzeichnet, daß an der Einlaßseite der Siebtrommel (15) wenigstens ein Schaber (34) angeordnet ist.

**Revendications**

1. Crible, particulièrement pour pâte cellulosique et pâte recyclée, comportant un tambour classeur (15) tourillonnant autour d'un axe de rotation et monté dans une enveloppe (18) présentant une entrée (17) de pâte liquide, une sortie (18) de pâte épurée, et, une sortie (19) d'évacuation de refus d'épuration, le tambour classeur (15) étant disposé entre l'entrée (17) et la sortie (18) de façon que l'écoulement apparaissant à travers lui de son côté entrée à son côté sortie soit dirigé radialement vers l'intérieur vers son axe de rotation, caractérisé en ce qu'au moins un moyen déflecteur fixe (26) est disposé sur le côté sortie du tambour classeur (15) lequel moyen déflecteur sépare de la sortie (18) un secteur du tambour classeur, et que le long d'une partie au moins de ce secteur une communication est établie par franchissement d'un bord du tambour classeur entre l'entrée (17) et l'espace situé entre le tambour classeur (15) et le moyen déflecteur (26), de sorte que l'écoulement, intervenant à 1' encontre de la force centrifuge au niveau du moyen classeur tournant, est interrompu dans le secteur mentionné et est remplacé par un écoulement à contresens dépendant de la force centrifuge.

2. Crible selon la revendication 1, caractérisé en ce que la communication est établie par un espace intermédiaire (24) entre une paroi (23) de l'enveloppe (16) et le bord de tambour cité.

3. Crible selon la revendication 2, caractérisé en ce que le tambour classeur (15) est ouvert à une extrémité vers la paroi (23) citée, et que le moyen déflecteur (26) est fixé à cette paroi et s'étend suivant l'axe du tambour classeur jusqu'à l'autre extrémité (20) du tambour classeur.

4. Crible selon la revendication 2 ou 3, caractérisé en ce que la sortie (18) est coaxiale au tambour classeur (15) et située dans la paroi (23) citée, et qu'une série de moyens déflecteurs régulièrement répartis (26—29) est disposée à l'intérieur du tambour classeur (15).

5. Crible selon l'une quelconque des revendications précédentes, caractérisé en ce qu'entre chaque moyen déflecteur (26—29) et le tambour classeur (15) est disposé un moyen d'interception fixe (30—33) empêchant l'écoulement à travers le moyen classeur le long d'une partie du secteur mentionné terminant ce secteur — en observant dans le sens de rotation du tambour classeur — tout en permettant l'écoulement le long d'une partie de celui-ci commençant ledit secteur.

6. Crible selon l'une quelconque des revendications précédentes, caractérisé en ce que sur le côté d'entrée du tambour classeur (15) est disposé au moins une racle (34).

0 100 345

Fig.1

Fig.2